# EUROPEAN PATENT APPLICATION

(11) **EP 3 869 048 A1**
(43) Date of publication of application: **25.08.2021**
(21) Application number: 21157996.6
(22) Date of filing: 18.02.2021
(51) Int. Cl.: F16B 7/04

(54) **PROFILE FASTENER**

(30) Priority: 19.02.2020 EP 20158361
(71) Applicant: Illinois Tool Works, Inc., Glenview, Illinois 60025 (US)
(72) Inventor: DUELL, Florian, 97993 Creglingen (DE); KLEIN, Torsten, 67677 Enkenbach-Alsenborn (DE)
(74) Representative: HGF

(57) **Abstract**

A fastener for securing a first profile to a second profile in an assembled configuration, wherein, each of the first profile and the second profile have a side wall having a hole formed therein, and wherein, in the assembled configuration, the fastener is disposed within a first channel of the first profile and the second profile is disposed within a second channel of the first profile adjacent the first channel and the hole of the first profile aligns with the hole of the second profile, the fastener comprising: a housing having a hole formed therein, and a locking member configured to move from an unlocked position to a locked position and having a locking element extending therefrom, wherein, in the unlocked position, the locking element is contained within the housing and the housing is insertable into a first channel of a first profile, and wherein, in the locked position, at least part of the locking element is arranged to extend into a second channel of the first profile adjacent the first channel to prevent movement of the second profile relative to the first profile.

## Description

### Technical Field of Invention

The invention relates to a fastener. In particular, the invention relates to a fastener that facilitates the locking of two parts in an assembly. For example, the fastener can be used to lock a first structural element to a second structural element, such as a first profile to a second profile. The invention also relates to an assembly including a fastener, and at least one structural element such as a profile.

### Brief Description of Drawings

Example embodiment(s) are illustrated in the accompanying drawings, in which:
**Figure 1** illustrates a fastener according to the prior art;
**Figure 2** illustrates a section view of the fastener of Figure 1;
**Figure 3** illustrates a perspective view of the parts of a fastener assembly according to an embodiment of the present invention;
**Figure 4** illustrates an exploded view of a fastener according to an embodiment of the present invention;
**Figure 5** illustrates a section view of a fastener assembly according to an embodiment of the present invention, in a first configuration;
**Figure 6** illustrates a section view of the fastener assembly of Figure 5, in a second configuration;
**Figure 7** illustrates an exploded view of a fastener according to another embodiment of the present invention;
**Figure 8** illustrates an exploded view of a fastener according to a further embodiment of the present invention;
**Figure 9** illustrates an exploded view of a fastener according to a yet further embodiment of the present invention;
**Figure 10** illustrates a perspective view of the parts of a fastener assembly according to an embodiment of the present invention, in a first configuration;
**Figure 11** illustrates a perspective view of the parts of the fastener assembly of Figure 10, in a second configuration;
**Figure 12** illustrates a perspective view of the parts of the fastener assembly of Figure 10, in a third configuration;
**Figure 13** illustrates a section view of a fastener assembly according to another embodiment of the present invention, in a first configuration;
**Figure 14** illustrates a section view of the fastener assembly of Figure 13, in a second configuration;
**Figure 15** illustrates a perspective view of the parts of a fastener assembly according to a still further embodiment of the present invention;
**Figure 16** illustrates a section view of the fastener assembly of Figure 15, in a first configuration; and
**Figure 17** illustrates a section view of the fastener assembly of Figure 15, in a second configuration.

### Description

The illustrated example embodiment(s) relates to a fastener, and to a fastener assembly comprising a fastener and at least two structural elements such as profiles.

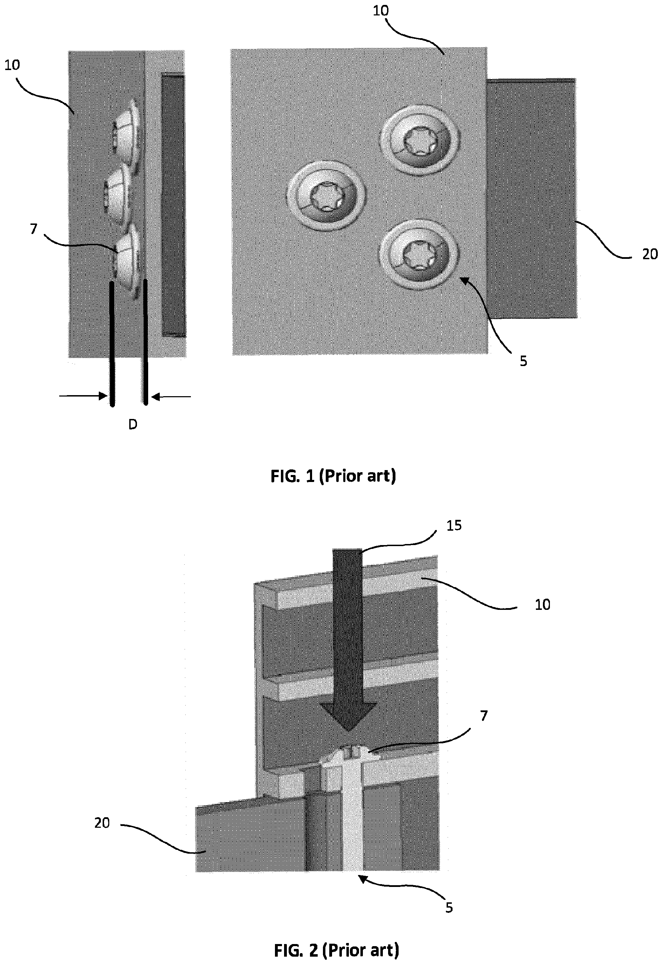

The drawings (specifically Figures 1 and 2) illustrate a fastener in accordance with the prior art, showing a solution to fix two profiles 10, 20 with each other. Head 7 of screws 5 (or other blocking elements) extend outside of the profile 10 sidewise (Figure 1 "D"). This is often implemented in areas where there is limited space for the insertion of fasteners. The illustrated example according to the prior art shows an internally placed screw 5 that is provided to fix the profiles 10, 20 without needing access to the head 7 of the fastener. Accessing 15 the head 7 of the fastener while the fastener is assembled in place can be difficult, particularly when the fastener is disposed within a channel of a profile as access to the fastener is restricted by the geometry of the profile. The requirement of accessing 15 the head 7 of the fastener can also or additionally lead to significant openings in the profile 10, 20, weakening the structure.

The drawings illustrate a new design for a fastener 100, 300 that is applicable to fix two parts 210, 220 relative to each other. The new design for the fastener 100, 300 locks the parts 210, 220 together with improved retention performance and structural integrity. The new design also provides an improved accessibility for assembly and removal of the fastener 100, 300, and therefore facilitating the assembly and disassembly of the parts. The parts may be structural members. The parts may be profile members 210, 220.

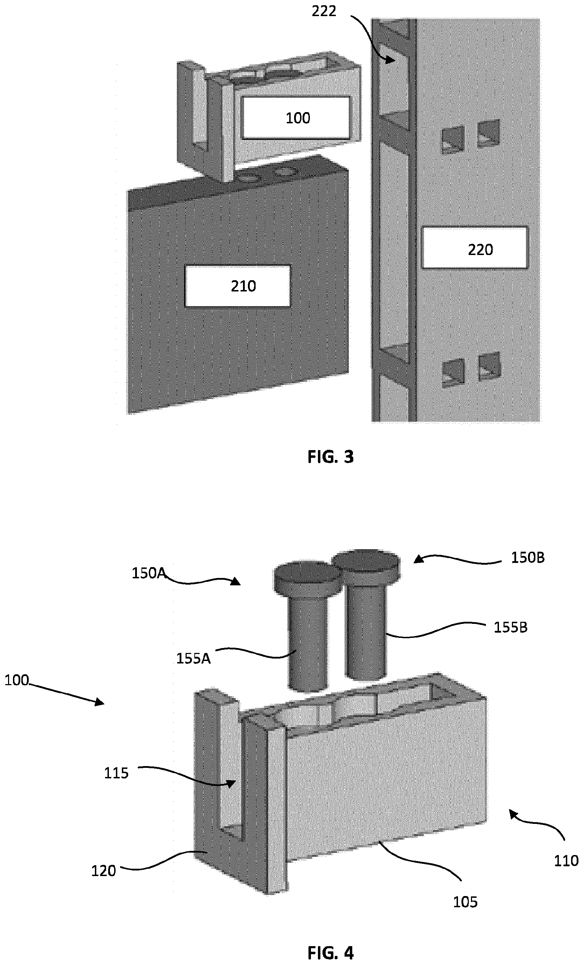

Figure 4 illustrates a fastener 100 having a housing 105 and two locking members 150A, 150B disposed within the housing 105. Each locking member 150 has a locking element 155A, 155B extending therefrom. The housing 105 extends from a proximal end to a distal end 110. The housing 105 is designed to be inserted into a channel 222 of a structural element such as a profile 220. Once assembled, the housing 105 is at least partially located within the channel 222. The housing 105 also includes a slot 115 for accessing the locking member 150 within the housing 105 from a side of the housing 105. This allows a tool (not shown) to be inserted into the housing 105 to actuate the locking members 150A, 150B from an unlocked position to a locked position. One way to actuate the locking members 150A, 150B is to press down onto the locking members 150A, 150B, but it would be apparent that other ways of actuating the locking members 150A, 150B are possible. It would also be apparent that the locking member can be moved to the unlocked position, for example through engagement with the external tool, to release the second profile 220 from the first profile 210 and to allow the disassembly of profiles 210, 220 from one another.

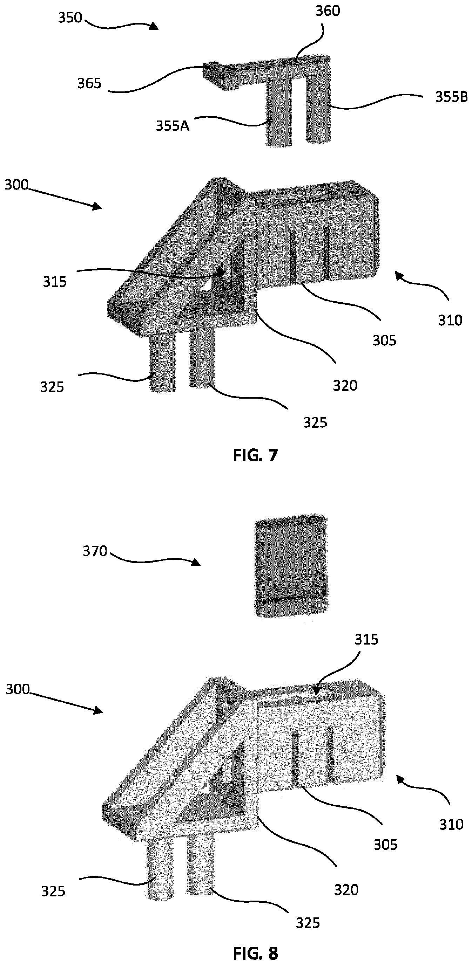

The locking element 155 is designed to be part of the locking member 150 and can be either assembled or injection molded. In the example illustrated in Figure 4, the locking members 150A, 150B are configured as pins having a head formed thereon. However, the locking member 150 may have a different shape or profile. For example, Figure 8 illustrates a locking member 370 configured as a wedge. While the example of Figure 4 shows two locking members 150A, 150B, it would be apparent this was not essential and that the fastener 100 may include one locking member, or more than two locking members (e.g. three, four, or five, or more). Similarly, while each locking member 150 is shown having a single locking element 155 in Figure 4, it would be apparent this was not essential, and that the fastener 100 may include a locking member having two or more locking elements formed thereon, such as is shown in Figure 7, where one locking member 350 has two locking elements 355A, 355B extending therefrom. However, the specific number of locking members and locking elements can be adapted depending on the application of the fastener 100, 300. Moreover, the locking member may be formed of different materials, such as metal or plastic. Depending on the application, the loads applied to the locking elements 155 can vary from a very low load, to a very high load_{[Rw1]}. As such, the locking members 150 and locking elements 155 can be chosen to suit the desired application. The present fastener 100, 300 is able to withstand much higher loads, such as torques, compared to screw and bushing combinations made from metal.

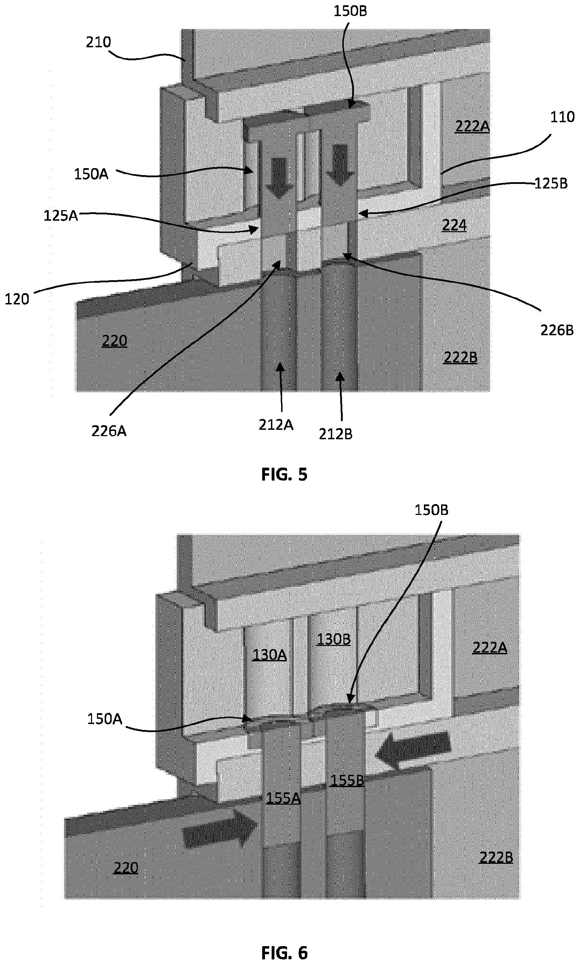

Figure 5 illustrates a section view of a fastener assembly according to an embodiment of the present invention, in a first configuration. The first configuration shows the locking members 150A, 150B in the unlocked position. The assembly of Figure 5 shows a fastener 100 inserted into a first channel 222A of a first profile 210, and a second profile 220 inserted into a second channel 222B of the first profile 210. The first channel 222A is adjacent the second channel 222B and is separated by a side wall 224 of the first profile 210. As shown in Figure 5, the housing 105 has two holes 125A, 125B formed therein, the side wall 224 has two holes 226A, 226B formed therein, and the second profile 220 has two holes 212A, 212B formed therein. In the assembled configuration, the holes 212A, 226A, 125A form a path for the locking element 155A to pass from the first channel 222A to the second channel 222B. Similarly, holes 212B, 226B, 125B form a path through which locking element 155B can pass. In the unlocked configuration, the locking members 150A 150B are contained within the housing 105 with the locking elements 155A, 155B arranged within the holes 125A, 125B of the housing 105.

Figure 6 shows recesses 130A, 130B may be formed within the housing 105 for guiding the locking members 150A, 150B within the housing 105. When the locking member 150 is moved to the locked position, the locking elements 155A, 155B extend from the first channel 222A to the second channel 222B and prevent relative movement between the first profile 210 and the second profile 220. As the head of the locking member 150 has a larger cross-section than the locking element 155 when viewed along a longitudinal axis of the locking member 150, this can limit the displacement of the locking element 155 into the second channel 222B to a pre-determined distance. Thus, the locking element 155 is able to partially extend into the second channel 222B in a reliable manner and without the user having to actively stop the locking member 150 in the locked position.

While the hole 125A, 125B can be countersunk holes, such as shown in Figure 6, it would be apparent this was not essential and that the recess for the head may be provided by other means within the housing 105. While the locking member 150 is shown having a head which abuts the housing 105 to prevent it passing through the hole 125, it would be apparent this was not essential, and other means for retaining at least a part of the locking member 150 in the housing 105 are possible. Similarly, while it is desirable to limit the movement of the locking member 150, this is not essential. For example, locking member 370 configured as a wedge is one example of a locking member 370 which has a uniform cross-section which can still provide the necessary functions when in the unlocked and locked positions.

While the housing 105 is described as having a number of holes 125 corresponding to the number of locking elements 155, it would be apparent that this was not essential, and that a single hole, for example a slot, may be able to accommodate more than one locking element and still achieve the described functionality.

Assembly of the profiles 210, 220 generally involves "pushing down" the locking elements 155A, 155B by inserting a tool or a ledge above the locking elements 155. The locking members 150A, 150B are moveable from the unlocked position (shown in Figure 5 as a preassembly position) to a locked configuration (shown in Figure 6). Preferably, the locking members 150A, 150B can be actuated by an external tool (not shown) such as a slider or similar such tool that can engage the locking member 150A, 150B and press the locking member 150A, 150B through the holes 125A, 125B in the housing 105 and into the holes 226A, 226B formed in the side wall 224 and holes 212A, 212B formed in the second profile 220.

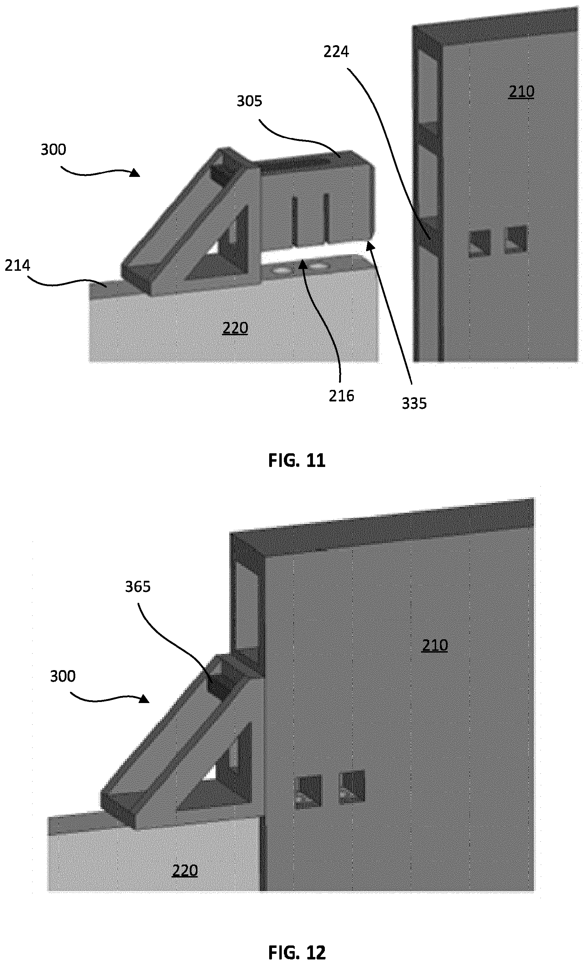

The slider may be shaped to provide an angled surface relative to the longitudinal axis of the channel 222, which by its shape pushes the locking elements 155A, 155B into their respective holes while being inserted into the second profile 220. In some cases, the slider is part of the fastener 100. In some cases the slider is slidably secured to the housing 105. In some cases, the slider is either assembled or injection molded. The locking elements 155A, 155B may alternatively be pushed down by a ledge 365 (see Figure 12) to reduce the loading transferred to the locking members 150A, 150B in a lateral direction relative to the direction of assembly of the locking members 150A, 150B.

Once the locking elements 155A, 155B penetrate both profiles 210, 220 and are located in holes 212A, 212B of the second profile 220 in the adjacent channel 222B, the second profile 220 is unable to be withdrawn from the channel 222B and is thus locked in position (as shown in Figure 6). Any other movement of the profiles 210, 220 is blocked by their geometry, which further decreases the loads exerted on the locking elements 155A, 155B. The use of multiple locking elements 155A, 155B enhances the secure hold provided by the fastener 100.

It would be apparent that the locking members 150A, 150B may be actuated separately, for example, sequentially pressing locking element 155A into hole 212A before pressing locking element 155B into hole 212B, or simultaneously, i.e. pressing both locking members 150A, 150B such that the locking elements 155A, 155B are inserted into respective holes 212A, 212B at the same time.

The housing 105 also includes a flange 120 spaced from the distal end 110. The flange 120 acts as a stop angle of the housing 105 and limits the extent to which the housing 105 can be inserted into the channel 222A. Thus, by selecting an appropriate distance between the flange 120 and the distal end 110, it is possible to insert the housing 105 into the channel 222A by a pre-determined distance such that the holes 125A, 125B of the housing 105 are aligned with the holes 226A, 226B of the side wall 224 which facilitates the depression of the locking elements 155A, 155B into the second profile 220.

In some cases, the fastener 100 can be provided with fixation elements (see Figure 7) for securing the fastener 100 to the second profile 220 in a preassembled manner before the second profile 220 is inserted into the first profile 210. This provides an alternative to inserting the fastener 100 and the second profile 220 into the first profile 210 separately.

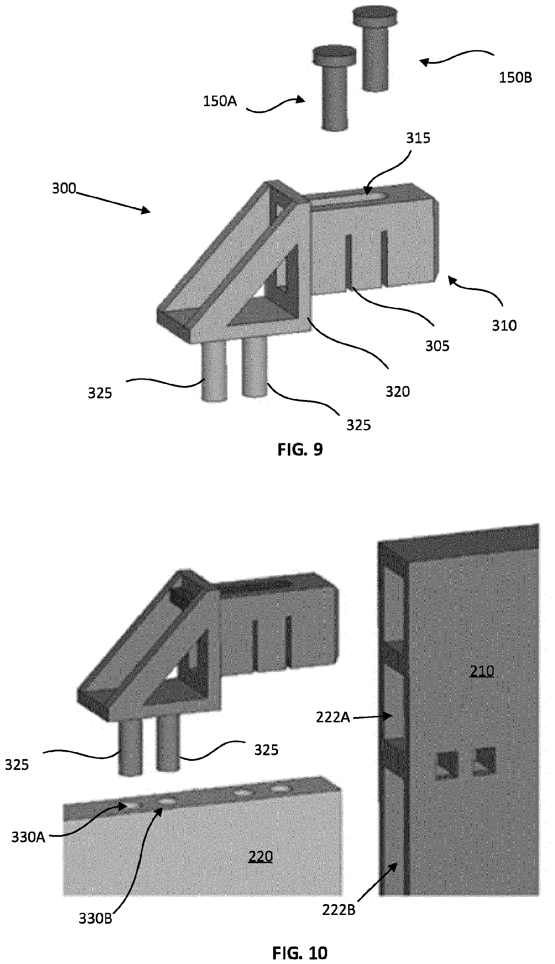

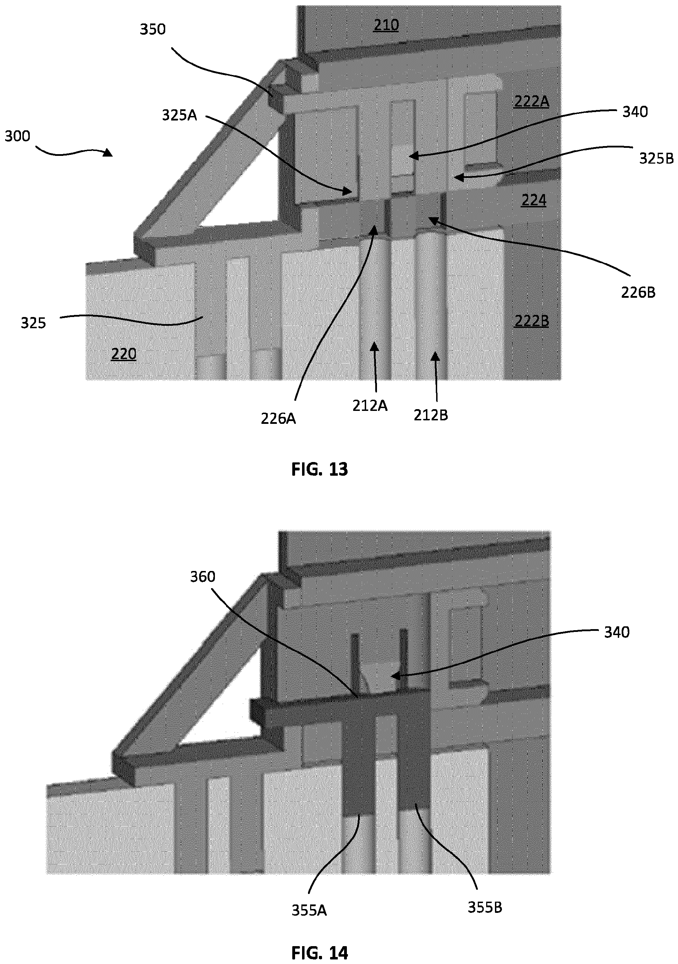

Figure 7 illustrates an alternative exemplary fastener 300. The fastener 300 includes a housing 305 extending from a proximal end to a distal end 310. The housing 305 has a slot 315 for accessing an internal cavity of the housing 305. The fastener 300 also includes a locking member 350 that is at least partially contained within the housing 305. The locking member 350 includes two locking elements 355A, 355B, and an arm 360 extending from the locking elements 355A, 355B to a ledge 365 disposed outside of the housing 305. The locking member 350 operates in a similar manner to locking member 150, whereby an external tool can be used to depress the locking member 350 to press the locking elements 355A, 355B into respective holes 212A, 212B of a second profile 210 located in an adjacent channel 222B of the second profile 220 containing the fastener 300 (see Figure 13). Alternative locking members 150A, 150B and 370 are shown in combination with the housing 305 described herein (Figures 8 and 9). While the arm 360 is shown having a ledge 365 secured thereto, it would be apparent the ledge 365 was not essential, and that the external tool could be used to depress the arm 360 to actuate the locking member 350.

The ledge 365 advantageously facilitates engagement between the locking member 350 and the external tool used to depress the locking member 350 as it provides a larger area for the external tool to engage compared to the end of the arm, which is sized to fit through the slot 315 in the housing 305. The illustrated ledge 365 has a longitudinal axis that is perpendicular to the longitudinal axis of the arm 360 which is substantially parallel to the longitudinal axis of the housing 305. However, it would be apparent the illustrated ledge 365 is only one example of a structure that is suitable for providing an engagement area for engaging the arm 360. Fastener 300 also includes a flange 320 for limiting the extent to which the housing 305 can be inserted into the channel 222A in the same manner as described above. The locking member 350 can also be moved between the locked position and the unlocked position by engaging the ledge 365 and lifting or pulling the locking member in a disassembly direction, or pressing or pushing the ledge 365 in an assembly direction. The external tool used to move the locking member 350 to the locked position may be used to move the locking member 350 to the unlocked position. In some cases, a different tool may be used to move the locking member 350 to the unlocked position as is used to move the locking member 350 to the locked position. In some cases, a finger of the user may be used to actuate the locking member 350 between the locked and unlocked positions.

The fastener 300 also includes fixation elements 325 which allow the fastener 300 to be secured to the second profile 220 prior to insertion of the second profile 220 into channel 222B of the first profile 210. This preassembled configuration, where the fastener 300 is secured to the second profile 220 prior to assembly, provides a more efficient assembly process, as the holes 325A, 325B in the housing 305 through which the locking elements 355A, 355B will pass can be aligned with the corresponding holes 212A, 212B in the second profile 220 before the profiles 210, 220 are assembled. As illustrated, the fixation elements 325 are pins that can be inserted into corresponding holes 330A, 330B formed in a top surface 214 of the second profile 220. However, it would be apparent that any fixation means suitable for attaching the fastener 300 to the second profile 220 would be suitable for use with the present fastener 300, and that holes 330A, 330B are not essential to the function of the fixation means.

The housing 305 also includes a guide surface 335 which is shaped to guide the housing 305 into the first channel 222A. As shown in Figure 11, the guide surface 335 is located at the distal end 310 of the housing 305. Thus, when the fastener 300 and the second profile 220 are preassembled, the housing 305 acts as an assembly guide for the user. However, it would be apparent that shaping the distal end 310 of the housing 305 was not essential, and that shaping a particular surface of the housing 305 was only was example of guiding means which would be suitable for guiding the housing 305 in the described manner. The fastener 300 or second profile 220 can include equivalent structures or assemblies to act as the guiding means to guide the profile 220 and/or fastener 300 into the corresponding channel 222A, 222B.

In the preassembled configuration, the second profile 220 and the fastener 300 are secured to one another by the fixation elements 325 such that a gap 216 is formed between the housing 305 and the top surface 214 of the second profile 220. As shown in Figure 11, this can be achieved by connecting the flange 320 to a plate from which the fixation elements 325 extend, such that the flange 320 forms a periphery around the housing 305 at the proximal end of the housing to space the housing 305 from the outer edge of the flange 320 that abuts the top side 214. However, it would be apparent this specific arrangement was not essential, and that there are other ways to secure the housing 305 to provide a gap 216 between the housing 305 and the top side 214. The gap 216 is arranged to receive the side wall 224 of the first profile 210 when the second profile 220 is inserted into the first profile 210. Thus, a preassembled profile 220 and fastener 300 having a flange 320 can be inserted into respective channels 222A, 222B of the first profile 210 such that the holes 325A, 325B in the housing 305 are aligned with the holes 226A, 226B in the side wall 224 and the holes 212A, 212B in the second profile 220. This advantageously results in an assembly where a user can simply press the preassembled fastener 300 and second profile 220 into the first profile 210 such that all of the necessary holes are aligned. The user is thus able to actuate the locking member 350, for example by pressing the ledge 365 that protrudes out of the housing 305 as shown in Figure 12, without having to further adjust or align any of the fastener 300 or profiles 210, 220.

In some cases, the fastener 300 includes a clip 340 (see Figure 14) to secure the locking member 350 in the locked position. As there are no significant forces exerted onto the locking elements 355A, 355B in the assembly direction, the clip 340 may be configured as a simple cantilever clip. The clip 340 is resiliently deformable and is arranged to be deployed from a retracted position (see Figure 13), where the clip does not hinder movement of the locking member 350, to a deployed position (see Figure 14) where the clip 340 engages the arm 360 to a deployed position to hold the locking member 350 in the locked position. As is illustrated in the Figures, the locking elements 355A, 355B can be used to hold the clip 340 in the retracted position, such that when the locking elements 355 are depressed, the clip is free to move to its biased position to hold the locking member 350 in the locked position. While the clip 340 is shown extending from the housing 305, it would be apparent this was not essential and that the inter-engagement provided between the clip and the locking member 350 can be achieved in other configurations. If the locking member 350 needs to be moved to the unlocked position, the clip 340 may be retracted, for example using an external tool, such that the locking member 350 can move to the unlocked position. The same tool that engages the locking member 350 may also be used to depress the clip 340 to allow movement of the locking member 350 to the unlocked position.

Depending on the application and the loads exerted on the profiles, the locking elements 355A, 355B can vary in shape, for example by having a cylindrical, oval, ledge or wedge, or obround cross-section. Likewise, the number of locking members 350 and/or locking elements 355A, 355B can be varied depending on the application. For example, an assembly having one, two, or three locking members 350, each having one, two or three locking elements 355A, 355B is envisaged. Moreover, the locking member 350 can be made from different materials from one another, or from the housing 305. The locking member 350 can be made of the same materials or a different material to the housing 305. For example, the locking member 350 can be made of plastic when the housing 305 is made of plastic. In some cases, the locking member 350 can be made of metal when the housing 305 is made of metal. Alternatively, the locking member 350 can be made of metal when the housing 305 is made of plastic or vice versa. In some cases it is desirable for the housing 105, 305 to include one or more frangible sections designed to fail if the loads applied to the fastener 100, 300 are above a pre-determined level. Should the loads applied to the fastener 100, 300 exceed the pre-determined level, the frangible section will break or crack in a controlled manner. Thus, the frangible sections provide a fastener having pre-determined breaking points. This avoids the fastener 100, 300 breaking in an undesirable manner which may cause further damage to the fastener 100, 300 and/or the profiles 210, 220. It would be apparent that the frangible section was an optional aspect of the fastener 100, 300.

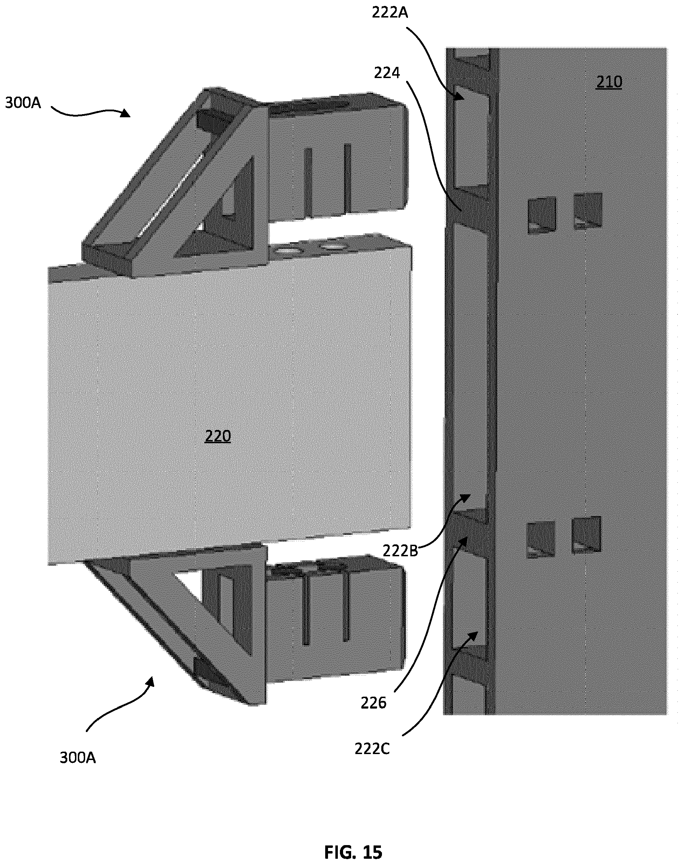

Figure 15 illustrates an exemplary assembly, where two fasteners 300A, 300B are secured to opposed sides of a profile 220. By providing a profile 220 with fasteners 300A, 300B on both sides, the stability of the joint and/or fixation is improved. The shapes of the profiles 210, 220 allows them to be fixed using the locking elements 355 in the manner described above. This allows only a linear movement of the profiles within the channels 222B and also prevents relative movement between the profiles 210, 220 once the locking members 350 are in the locked configuration.

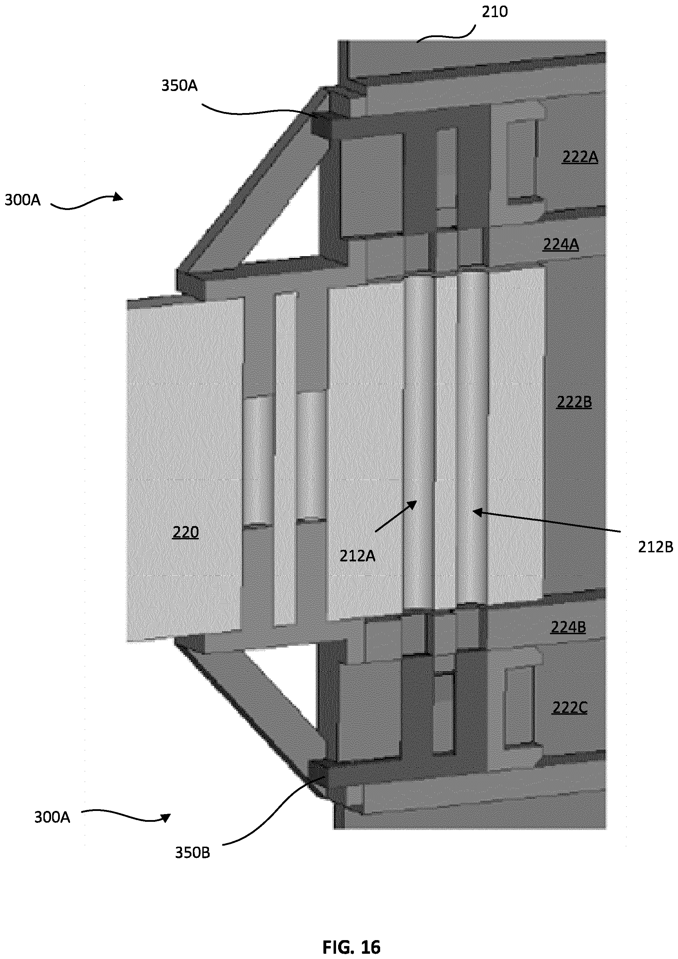

As shown in Figure 16, the first fastener 300A is inserted into a first channel 222A of the first profile 210, the second profile 220 is inserted into a second channel 222B of the first profile 210, and the second fastener 300B is inserted in a third channel 222C of the first profile 210. The first channel 222A is adjacent the second channel 222B, and is separated by a first side wall 224 of the second profile 220. The second channel 222B is adjacent the third channel 222C and is separated by a second side wall 224B of the second profile 220. The holes 212A, 212B are also shown as continuous holes that extend through the depth of the second profile 220 and intersect one another, but it would be apparent that this was not essential. In some cases, one or more of the holes 212A, 212B may be a blind hole.

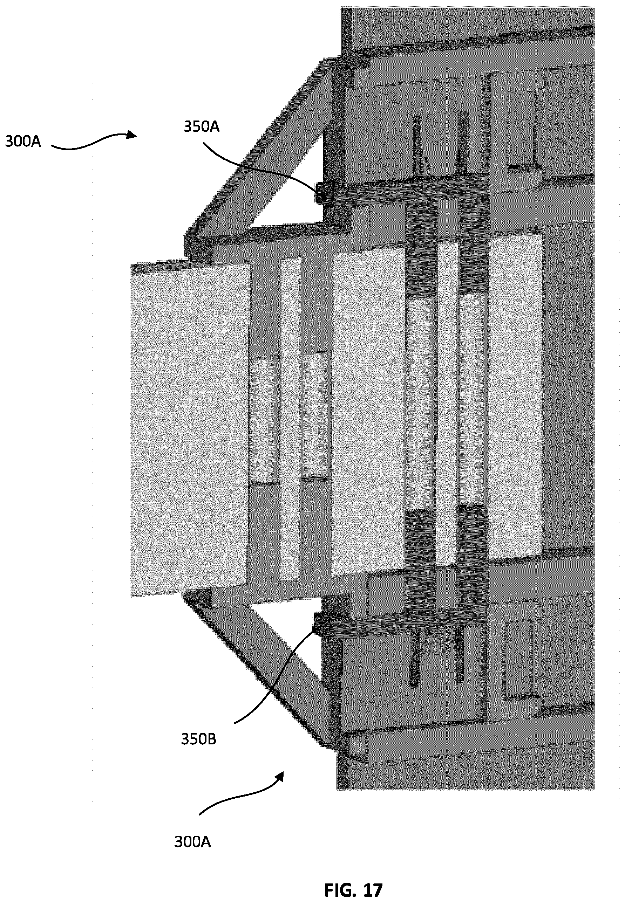

Figure 17 shows the respective locking members 350A, 350B of the fasteners 300A, 300B in the locked position. While two fasteners 300A, 300B of the same type are shown in Figure 16, it would be apparent that different combinations of the above-described fasteners 100, 300 may be used dependent on the application.

An exemplary method of assembly using the present fastener is described below. The method includes providing a fastener 100 as described above, inserting the fastener 100 into a first channel 222A of a profile 220, inserting a further profile 210 into a second channel 222B of the profile 220, the second channel being adjacent to the first channel 222A. Actuating the locking member 150 from the unlocked position to the locked position to secure the first profile 210 to the second profile 220.

A further exemplary method of assembly using the present fastener is described below. The method includes providing a fastener 300 as described above, fixing the fastener 300 to a first profile 210, inserting the first profile with the fastener 300 attached into adjacent first 222 and second 222b channels of a second profile 220, such that the fastener 300 is disposed in the first channel 222A and the first profile is disposed in the second channel 222B. Actuating the locking member 350 from the unlocked position to the locked position to secure the first profile 210 to the second profile 220.

While profiles have been described above, it would be apparent that this was merely one type of structural element that can be secured using the presently described fasteners. While the profiles illustrated described above have a number of channels 222 formed therein, it would be apparent this was not essential. In particular, the first profile 210 and second profile 220 may have different numbers of channels to one another. In some cases, the second profile 220 may have only have holes for receiving one or more locking elements 155, 355 formed therein_{[RW2]}.

## Claims

1. A fastener for securing a first profile to a second profile in an assembled configuration, wherein, each of the first profile and the second profile have a side wall having a hole formed therein, and wherein, in the assembled configuration, the fastener is disposed within a first channel of the first profile and the second profile is disposed within a second channel of the first profile adjacent the first channel and the hole of the first profile aligns with the hole of the second profile, the fastener comprising:
a housing having a hole formed therein, and
a locking member configured to move from an unlocked position to a locked position and having a locking element extending therefrom,
wherein, in the unlocked position, the locking element is contained within the housing and the housing is insertable into a first channel of a first profile, and
wherein, in the locked position, at least part of the locking element is arranged to extend into a second channel of the first profile adjacent the first channel to prevent movement of the second profile relative to the first profile.

2. A fastener according to claim 1, wherein the locking member comprises an arm extending therefrom to a distal end located outside the housing, and wherein the distal end is configured to engage an external tool for moving the locking member from the unlocked position to the locked position.

3. A fastener according to claim 1 or 2 wherein the locking member comprises a ledge for engaging the arm.

4. A fastener according to any preceding claim, comprising a slider slidably mounted to the housing and arranged to move the locking member from the unlocked position to the locked position upon moving the slider from a first depth within the channel to a second depth within the channel.

5. A fastener according to any preceding claim comprising a resiliently deformable clip, wherein the resiliently deformable clip is arranged to be held in a retracted position when the locking member is in the unlocked position, and wherein the resiliently deformable clip is biased to the deployed position when the locking member is in the locked position, and wherein, when in the deployed position, the resiliently deformable clip is arranged to hold the locking member in the locked position.

6. A fastener according to claim 5, wherein the resiliently deformable clip extends from the housing, and wherein the resiliently deformable clip is arranged to engage the locking member in the locked position.

7. A fastener according to any preceding claim comprising a flange spaced from a first end of the housing configured to be inserted into the first channel of the first profile, wherein the distance from the first end of the housing and the flange is such that the hole of the housing and the hole of the first profile are aligned when the flange abuts the first profile.

8. A fastener according to any preceding claim, wherein the housing comprises a guide surface arranged to abut the side wall of the first profile, so as to guide the housing into the first channel upon abutment of the guide surface and the side wall.

9. A fastener according to any preceding claim comprising a fixation element for fixing the fastener to the second profile.

10. A fastener according to any preceding claim wherein the locking element comprises a round, circular, elliptical or obround cross-sectional profile.

11. A fastener according to any preceding claim, wherein the locking member comprises a plurality of locking elements extending therefrom.

12. A fastener according to any preceding claim, wherein the housing comprises a frangible section configured to break when a load applied to the fastener exceeds a pre-determined level.

13. An assembly comprising:
a fastener according to any preceding claim secured to the side wall of a first profile,
wherein the side wall of the first profile has a hole formed therein for receiving the locking element, and
wherein the side wall of the first profile and the fastener are spaced from one another to provide a recess for receiving a side wall of a second profile, the side wall of the second profile having a hole formed therein for receiving the locking element.

14. An assembly according to claim 13 further comprising:
a second fastener according to any of claims 1 to 12 secured to a second side wall of the first profile,
wherein the second side wall of the first profile has a hole formed therein for receiving the locking element of the second fastener, and
wherein the second fastener and the second side wall of the first profile are spaced from one another to provide a second recess for receiving a second side wall of the second profile, the second side wall of the second profile having a hole formed therein for receiving the locking element of the second fastener.

15. An assembly according to claim 14, wherein the first and second side walls of the first profile are opposed sides of the first profile.
